# EUROPÄISCHE PATENTSCHRIFT

(11) **EP 3 770 013 B1**
(45) Veröffentlichungstag und Bekanntmachung des Hinweises auf die Patenterteilung: **13.04.2022**
(21) Anmeldenummer: 20180518.1
(22) Anmeldetag: 17.06.2020
(51) Int. Cl.: B60P 7/08

(54) **FAHRZEUGAUFBAU MIT EINER VORRICHTUNG ZUR LADEGUTSICHERUNG**
VEHICLE BODY WITH A DEVICE FOR SECURING LOADS
CARROSSERIE DE VÉHICULE DOTÉ D'UN DISPOSITIF DE FIXATION DE LA MARCHANDISE TRANSPORTÉE

(30) Priorität: 25.07.2019 AT 506782019
(43) Veröffentlichungstag der Anmeldung: 27.01.2021
(73) Patentinhaber: Easy Lock GmbH, 4020 Linz (AT)
(72) Erfinder: Gebesmair, Manfred, 4550 Kremsmünster (AT)
(74) Vertreter: Hübscher & Partner Patentanwälte GmbH

(56) Entgegenhaltungen:
- EP-A1- 2 255 997
- EP-A1- 3 053 776
- DE-A1-102010 035 194

## Beschreibung

Ladegutsicherung, die einen an Anschlagpunkten auf einander gegenüberliegenden Längsseiten einer Ladefläche angeschlagenen, mit einer Spanneinrichtung versehenen Spanngurt sowie eine Spanngurtführung umfasst, die zwei um Umlenkrollen im Eckbereich zwischen den Längswänden und der Decke des Fahrzeugaufbaus aus einem Seilspeicher gegen Federkraft ausziehbare, verschiebbar am Spanngurt angreifende Seiltrume aufweist. Ein solcher Fahrzeugaufbau ist aus dem Dokument EP 3 053 776 A1 bekannt.

Zur Sicherung von Ladegütern auf der Ladefläche von Fahrzeugen werden an Anschlagpunkten auf einander gegenüberliegenden Längsseiten der Ladefläche angreifende Spanngurte verwendet, die über das Ladegut geführt und mithilfe einer Spanneinrichtung festgezurrt werden. Um diese Spanngurte nicht von Hand aus über das zu sichernde Ladegut legen zu müssen, ist es bekannt (DE 101 38 771 A1, DE 102 18 465 A1, DE 10 2010 022 855 A1), die Spanngurte mithilfe von je zwei Zugmitteln zu führen, die unter einer Federbeaufschlagung versuchen, die Spanngurte in die Eckbereiche zwischen den Längswänden und der Decke des Fahrzeugaufbaus zu ziehen, sodass der Spanngurt in einer von der Spanneinrichtung gelösten Ausgangstellung von seiner Befestigung an einem Anschlagpunkt der Ladefläche nach oben in den Deckenbereich geführt und dort vom Zugmittel gehalten wird, um an der Angriffsstelle des Zugmittels umgelenkt und entlang der Decke zum gegenüberliegenden Zugmittel zu verlaufen, von dem dann die Restlänge des Spanngurts herabhängt. Durch diese Spanngurtführung wird das Beladen des Laderaums von der Fahrzeuglängsseite mit den herabhängenden Spanngurtenden unbehindert durch die Spanngurte möglich, deren herabhängenden Enden zur Ladegutsicherung lediglich unter einem Ausziehen der Zugmittel mit der am Anschlagpunkt auf der Ladeseite befestigten Spanneinrichtung verbunden werden müssen, um den Spanngurt unter einer Anlage am Ladegut festzurren zu können. Zum Öffnen der Spanngurte sind die Spanneinrichtungen zu lösen, wonach die federbeaufschlagten Zugmittel die Spanngurte wieder in die Ausgangslage ziehen.

Die Zugmittel selbst können in ihrer Länge elastisch dehnbar ausgebildet sein (DE 101 38 771), was zwar einfache Konstruktionsbedingungen schafft, jedoch Schwierigkeiten hinsichtlich einer ausreichenden Dehnungslänge bei entsprechend großen Rückstellkräften mit sich bringt. Aus diesem Grunde werden Zugmittel in Form von aus Seilspeichern ausziehbaren Seilen eingesetzt (DE 102 18 465 A1, DE 10 2010 022 855 A1), die auf federbeaufschlagten Speicherrollen aufgewickelt sind und gegen das durch die Federbeaufschlagung sichergestellte Rückdrehmoment von den Speicherrollen abgezogen werden können. Nachteilig ist allerdings, dass die auf beiden Längsseiten des Fahrzeugaufbaus im Deckenbereich anzuordnenden Seilspeicher nicht nur aufwendig sind, sondern auch bedingen, dass die Spanngurte, die über an den Seilenden vorgesehenen Rollen oder Gleitösen laufen, nur entsprechend dem Durchmesser der Seilspeicher abgehängt unterhalb der Decke des Fahrzeugaufbaus verlaufen können, was den möglichen Laderaum in der Höhe einschränkt.

Der Erfindung liegt somit die Aufgabe zugrunde, einen Fahrzeugaufbau mit einer Vorrichtung zur Ladegutsicherung so auszugestalten, dass eine platzsparende Spanngurtführung ohne Beeinträchtigung des Laderaums möglich wird.

Ausgehend von einem Fahrzeugaufbau der eingangs geschilderten Art löst die Erfindung die gestellte Aufgabe dadurch, dass die beiden Umlenkrollen in einer hohlen Querstrebe der Decke gelagert sind, dass die Querstrebe zwischen den beiden Umlenkrollen eine Zugfeder und den Seilspeicher aufnimmt, der einen von der Zugfeder beaufschlagten, entlang der Querstrebe verschiebbaren und einen in der Querstrebe verschiebefest gehaltenen Seilrollensatz besitzt, und dass die beiden Seiltrume Endabschnitte eines Seils bilden, das schlaufenbildend zwischen den beiden Seilrollensätzen hin- und hergeführt ist.

Durch diese Maßnahmen wird mit einfachen konstruktiven Mitteln sichergestellt, dass alle für die Spanngurtführung erforderlichen Konstruktionsteile innerhalb einer hohlen Querstrebe im Deckenbereich des Fahrzeugaufbaus untergebracht werden können, sodass auch der Spanngurt in seiner den Laderaum zur Ladung freigebenden Ausgangsstellung zwischen den beiden in der Querstrebe gelagerten Umlenkrollen unmittelbar unterhalb der Querstrebe von einer Längswand zur gegenüberliegenden Längswand des Fahrzeugaufbaus geführt werden kann, was eine vollständige Nutzung des Laderaums ermöglicht. Der durch den Einsatz einer Zugfeder beschränkte Federweg spielt in Bezug auf die geforderte Ausziehlänge der beiden am Spanngurt angreifenden Seiltrume keine Rolle, weil durch die Wahl einer entsprechenden Anzahl an Seilrollen in den beiden Seilrollensätzen des Seilspeichers eine die jeweiligen Anforderungen berücksichtigende Speicherlänge für das Seil zur Verfügung gestellt werden kann.

Besonders einfache Konstruktionsbedingungen ergeben sich, wenn die Querstrebe ein U-Profil bildet, das den Einbau der Umlenkrollen, des Seilspeichers und der Zugfeder zwischen den beiden Schenkeln des U-Profils erleichtert, diese Einbauteile durch den die beiden Schenkel verbindenden Steg jedoch gegenüber dem Laderaum abdeckt.

Die Zugfeder kann unterschiedlich ausgeführt werden und beispielsweise aus einer Gasfeder bestehen. Einfache Konstruktionsbedingungen ergeben sich allerdings, wenn als Zugfeder eine Schraubenfeder eingesetzt wird.

Zum sicheren Anheben des Spanngurts aus einer das Ladegut umschließenden Spannstellung in die den Laderaum freigebende Ausgangsstellung ist eine ausreichende Kraft der Zugfeder erforderlich. Höhere Zugfederkräfte bringen allerdings die Gefahr mit sich, dass der Spanngurt durch die federbeaufschlagten Seiltrume unkontrolliert nach oben gerissen wird. Um dies zu vermeiden, kann den beiden Umlenkrollen je eine in Seileinzugsrichtung wirksame Rücklaufbremse zugeordnet werden, die den unkontrollierten Seileinzug in den Seilspeicher unterbindet. Eine solche Rücklaufbremse kann in vorteilhafter Weise einen im Zulaufbereich der Umlenkrolle am Seiltrum anliegenden Bremshebel aufweisen. Wird dieser Bremshebel durch das unkontrolliert eingezogene Seiltrum mitgenommen, so wird er gegen die Umlenkrolle verschwenkt, wodurch das Seiltrum unter einem Bremsmoment an die Umlenkrolle angedrückt wird. und den Seileinzug stoppt. Mit dem Einleiten einer Ausziehbewegung des Seiltrums durch eine entsprechende Spanngurtbeaufschlagung von Hand aus, gibt der Bremshebel die Umlenkrolle wieder frei, sodass das Seiltrum kontrolliert in den Seilspeicher eingezogen werden kann.

In der Zeichnung ist der Erfindungsgegenstand beispielsweise dargestellt. Es zeigen
- Fig. 1: einen Fahrzeugaufbau mit einer erfindungsgemäßen Vorrichtung zur Ladegutsicherung in einer schematischen Ansicht in Fahrzeuglängsrichtung,

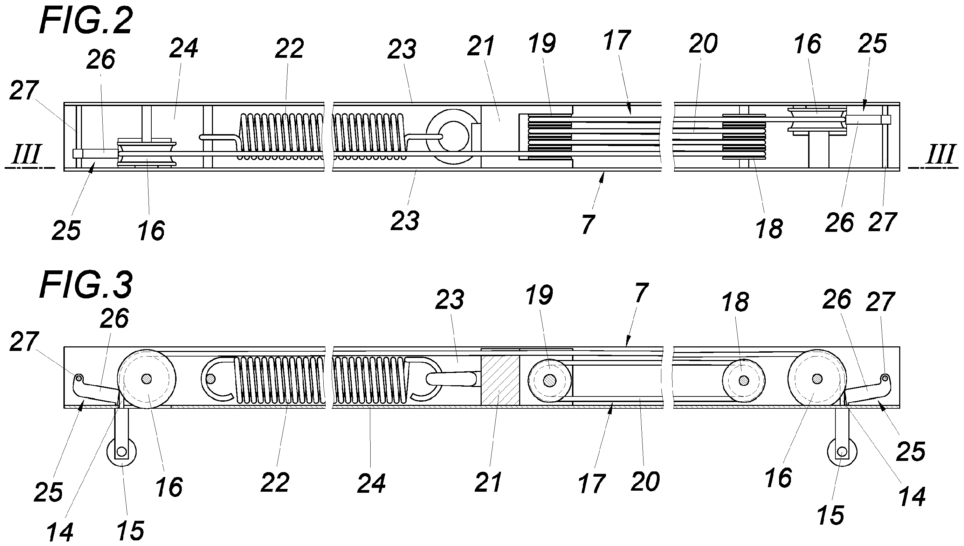

- Fig. 2: eine Querstrebe mit dem Seilspeicher für das die beiden am Spanngurt angreifenden Seiltrume bildenden Seil in einem Längsschnitt in einem größeren Maßstab und
- Fig. 3: die Querstrebe nach der Fig. 2 in einer Draufsicht.

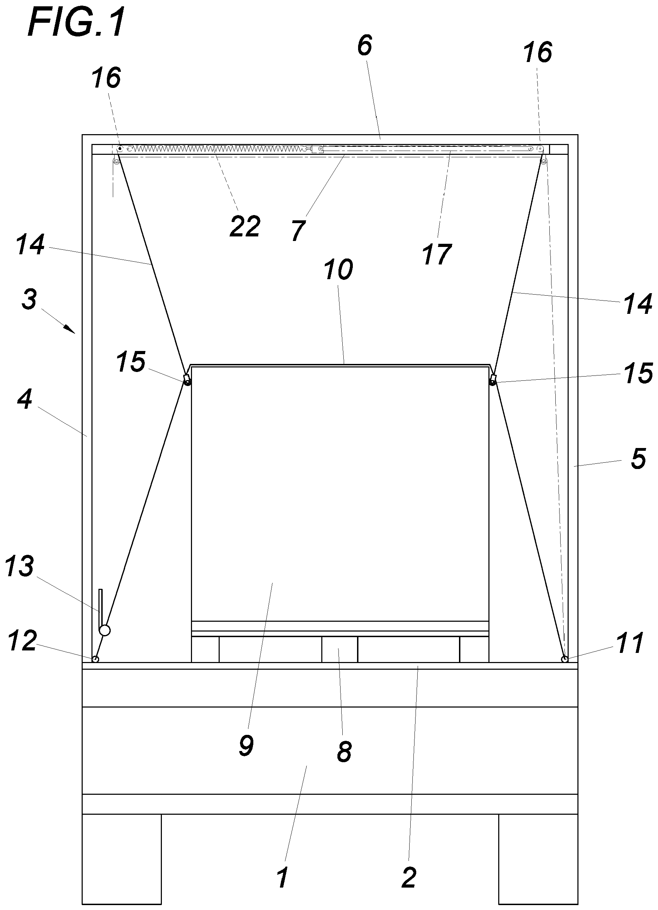

In der Fig. 1 ist ein Fahrzeug 1 mit einer Ladefläche 2 und einem Fahrzeugaufbau 3 dargestellt, der zwei einander gegenüberliegende Längswände 4, 5 und eine die Längswände 4, 5 verbindende Decke 6 umfasst. Dieser Fahrzeugaufbau 3 kann vorzugsweise ein Planengestell für eine die Längswände 4, 5 und die Decke 6 bildende Plane aufweisen, die im Bereich der Decke 6 auf Querstreben 7 abgestützt ist. Das Beladen erfolgt auf einer Längsseite des Fahrzeugs 1, im dargestellten Ausführungsbeispiel durch die geöffnete Längswand 4. Das auf einer Palette 8 aufruhende Ladegut 9 wird mithilfe wenigstens eines Spanngurts 10 gesichert, der auf der der Ladeseite gegenüberliegenden Längsseite des Fahrzeugs 1 im Bereich der Längswand 5 an einem Anschlagpunkt 11 der Ladefläche 2 angeschlagen ist und über das Ladegut 9 auf die gegenüberliegende Längsseite der Ladefläche 2 geführt wird, um durch eine an einem dem Anschlagpunkt 11 gegenüberliegenden Anschlagpunkt 12 der Ladefläche 2 angreifende Spanneinrichtung 13 um das Ladegut festgezurrt zu werden.

Zum Freigeben des in dieser Weise gesicherten Ladeguts wird die Spanneinrichtung 13, beispielsweise ein Ratschenhebel, gelöst und das freie Ende des Spanngurts 10 aus der Spanneinrichtung 13 gezogen, sodass der Spanngurt 10 durch zwei an ihm angreifende Seiltrume 14 gegen die Decke 6 des Fahrzeugaufbaus 3 gezogen werden kann. Die Seiltrume 14, die an ihrem freien Ende mit Gurtrollen 15 versehen sind, über die der -Spanngurt 10 verläuft, sind um Umlenkrollen 16 im Endbereich einer hohl ausgebildeten Querstrebe 7 zu einem Seilspeicher 17 geführt, der einen in der Querstrebe 7 verschiebefest gehaltenen Seilrollensatz 18 und einen entlang der Querstrebe 7 verschiebbar gelagerten Seilrollensatz 19 umfasst, zwischen welchen Seilrollensätzen 18, 19 das mit seinen Enden die Seiltrume 14 bildende Seil 20 schalufenbildend hin- und hergeführt ist. Die Anordnung ist dabei so getroffen, dass der Seilrollensatz 19 in einem Schlitten 21 gelagert ist, der von einer in der Querstrebe angeordneten Zugfeder 22, vorzugsweise einer Schraubenfeder, im Sinne eines Einziehens der am Spanngurt 10 angreifenden Seiltrume 14 beaufschlagt wird.

Die Querstrebe 7 ist vorzugsweise als U-Profil ausgebildet, zwischen dessen Schenkeln 23 die Umlenkrollen 16 für die Seiltrume 14, der Seilrollensatz 18 des Seilspeichers 17 gelagert sind und das feste Ende der Zugfeder 22 abgestützt ist. Gegenüber dem Laderaum werden die Zugfeder 22 und der Seilspeicher 17 sowie die Umlenkrollen 16 durch den die beiden Schenkel 23 verbindenden Steg 24 des U-Profils der Querstrebe 7 abgedeckt.

Aufgrund des federbeaufschlagten Seilspeichers 17 wird der Spanngurt 10 nach einem Lösen von der Spanneinrichtung 13 in eine in Fig. 1 strichpunktiert angedeutete Ausgangsstellung angehoben, in der der Spanngurt 10 unmittelbar unterhalb der Querstrebe 7 von der Längswand 5 zur Längswand 4 verläuft, und zwar um die Gurtrollen 15 der eingezogenen Seiltrume 14. Zum Festzurren eines Ladeguts braucht somit der Spanngurt 10 aus dieser Ausgangslage nur an seinem freien Ende erfasst und zur Spanneinrichtung 13 gezogen und dann mithilfe der Spanneinrichtung festgezurrt zu werden, sodass sich der Spanngurt 10 über das Ladegut 9 spannt und das Ladegut 9 an die Ladefläche 2 angedrückt gegen eine Verlagerung auf der Ladefläche 2 sichert.

Damit beim Lösen der Spanngurt 10 nicht durch die federbeaufschlagten Seiltrume 14 gegen die Decke 6 des Fahrzeugaufbaus nach oben unkontrolliert mitgenommen werden kann, ist den Umlenkrollen 16 für die Seiltrume 14 je eine Rücklaufbremse 25 zugeordnet. Diese Rücklaufbremse kann in einfacher Art durch einen Bremshebel 26 gebildet werden, der zwischen den Schenkeln 23 der Querstrebe 7 verschwenkbar gelagert ist und im Zulaufbereich der Seiltrume 14 an diesen anliegt. Da die Schwenkachse 27 der Bremshebel 26 oberhalb der Anlagestelle des Bremshebels 26 am Seiltrum 14 verläuft, wird bei einer Mitnahme eines Bremshebels 26 durch das anliegende Seiltrum 14 der Bremshebel 26 unter einer zunehmenden Verstärkung der Bremskraft gegen das Seiltrum 14 und die Umlenkrolle 16 verschwenkt, sodass der Einzug des Seiltrums 14 gestoppt wird. Bei einer Entlastung gibt der Bremshebel 26 das Seiltrum 14 wieder frei, sodass mit einer auf den Spanngurt 10 von Hand ausgeübten Rückhaltekraft der Spanngurt 10 sicher in die in Fig. 1 strichpunktiert angedeutete Ausgangslage gebracht werden kann.

## Patentansprüche

1. Fahrzeugaufbau mit einer Vorrichtung zur Ladegutsicherung, die einen an Anschlagpunkten (11, 12) auf einander gegenüberliegenden Längsseiten einer Ladefläche (2) angeschlagenen, mit einer Spanneinrichtung (13) versehenen Spanngurt (10) sowie eine Spanngurtführung umfasst, die zwei um Umlenkrollen (16) im Eckbereich zwischen den Längswänden (4, 5) und der Decke (6) des Fahrzeugaufbaus (3) aus einem Seilspeicher (17) gegen Federkraft ausziehbare, verschiebbar am Spanngurt (10) angreifende Seiltrume (14) aufweist, **dadurch gekennzeichnet, dass** die beiden Umlenkrollen (16) in einer hohlen Querstrebe (7) der Decke (6) gelagert sind, dass die Querstrebe (7) zwischen den beiden Umlenkrollen (16) eine Zugfeder (22) und den Seilspeicher (17) aufnimmt, der einen von der Zugfeder (22) beaufschlagten, entlang der Querstrebe (7) verschiebbaren und einen in der Querstrebe (7) verschiebefest gehaltenen Seilrollensatz (18, 19) besitzt, und dass die beiden Seiltrume (14) Endabschnitte eines Seils (20) bilden, das schlaufenbildend zwischen den beiden Seilrollensätzen (18, 19) hin- und hergeführt ist.

2. Fahrzeugaufbau nach Anspruch 1, **dadurch gekennzeichnet, dass** die Querstrebe (7) ein U-Profil bildet.

3. Fahrzeugaufbau nach Anspruch 1 oder 2, **dadurch gekennzeichnet, dass** die Zugfeder (22) als Schraubenfeder ausgebildet ist.

4. Fahrzeugaufbau nach einem der Ansprüche 1 bis 3, **dadurch gekennzeichnet, dass** den beiden Umlenkrollen (16) je eine in Seileinzugsrichtung wirksame Rücklaufbremse (25) zugeordnet ist.

5. Fahrzeugaufbau nach Anspruch 4, **dadurch gekennzeichnet, dass** die Rücklaufbremsen (25) einen im Zulaufbereich der Umlenkrolle (16) am Seiltrum (14) anliegenden Bremshebel (26) aufweisen.

## Claims

1. Vehicle body with a device for securing loads, which comprises a lashing strap (10), which is attached at attachment points (11, 12) on mutually opposing long sides of a loading surface (2) and is provided with a tensioning device (13), and a lashing strap guide which comprises two cable strands (14), which can be extended about deflection rollers (16) in the corner region between the long walls (4, 5) and the roof (6) of the vehicle body (3) from a cable store (17) against a spring force and displaceably engage the lashing strap (10), **characterised in that** the two deflection rollers (16) are mounted in a hollow transverse strut (7) of the roof (6), that, between the two deflection rollers (16), the transverse strut (7) accommodates a tension spring (22) and the cable store (17) which has a set (18, 19) of cable rollers which is acted upon by the tension spring (22), can be displaced along the transvers strut (7) and is non-displaceably held in the transverse strut (7), and that the two cable strands (14) form end portions of a cable (20) which is passed to and fro between the two cable roller sets (18, 19) in a loop-forming manner.

2. Vehicle body as claimed in claim 1, **characterised in that** the transverse strut (7) forms a U-shaped profile.

3. Vehicle body as claimed in claim 1 or 2, **characterised in that** the tension spring (22) is formed as a helical spring.

4. Vehicle body as claimed in any one of claims 1 to 3, **characterised in that** a return brake (25) which acts in the cable retraction direction is allocated to each of the two deflection rollers (16).

5. Vehicle body as claimed in claim 4, **characterised in that** the return brakes (25) comprise a brake lever (26) lying against the cable strand (14) in the run-in region of the deflection roller (16).

## Revendications

1. Structure de véhicule avec un équipement de sécurisation de chargement qui comprend une sangle de tension (10) dotée d'un dispositif de tension (13) accrochée à des points d'ancrage (11, 12) situés sur des côtés longitudinaux opposés l'une à l'autre d'une surface de chargement (2) ainsi qu'un système de guidage de sangle de tension qui comporte deux brins de câble (14) pouvant être extraits contre la force d'un ressort d'un enrouleur de câble (17) autour de poulies de renvoi (16) situées dans la zone d'angle entre les parois longitudinales (4, 5) et le toit (6) de la structure de véhicule (3) et entrant en prise de manière coulissante avec la sangle de tension (10), **caractérisée en ce que** les deux poulies de renvoi (16) sont montées dans une traverse creuse (7) du toit (6), que la traverse (7) accueille entre les deux poulies de renvoi (16) un ressort de traction (22) et l'enrouleur de câble (17) qui possède un jeu de poulies à câble (18, 19) sollicité par le ressort de traction (22) et pouvant coulisser le long de la traverse (7) et un autre maintenu sans pouvoir coulisser dans la traverse (7), et que les deux brins de câble (14) constituent les deux extrémités d'un câble (20) qui va et vient en formant une boucle entre les deux jeux de poulies de câbles (18, 19).

2. Structure de véhicule selon la revendication 1, **caractérisée en ce que** la traverse (7) forme un profilé en U.

3. Structure de véhicule selon la revendication 1 ou 2, **caractérisée en ce que** le ressort de traction (22) est configuré comme un ressort en spirale.

4. Structure de véhicule selon une des revendications 1 à 3, **caractérisée en ce qu'**à chacune des deux poulies de renvoi (16) est associé un frein de retour (25) agissant dans le sens d'introduction du câble.

5. Structure de véhicule selon la revendication 4, **caractérisée en ce que** les freins de retour (25) présentent un levier de frein (26) disposé dans la zone d'amenée de la poulie de renvoi (16) sur le brin de câble (14).
